# EUROPÄISCHE PATENTSCHRIFT

(11) **EP 2 369 209 B1**
(45) Veröffentlichungstag und Bekanntmachung des Hinweises auf die Patenterteilung: **09.05.2012**
(21) Anmeldenummer: 10002721.8
(22) Anmeldetag: 16.03.2010
(51) Int. Cl.: F16K 17/164, F16K 35/00

(54) **Zuhaltevorrichtung für Rückschlagklappen**
Closing device for non-return flaps
Dispositif de maintien en position fermée pour clapets battants

(43) Veröffentlichungstag der Anmeldung: 28.09.2011
(73) Patentinhaber: Rippert Besitzgesellschaft mbH & Co. KG, 33442 Herzebrock-Clarholz (DE)
(72) Erfinder: Niewöhner, Heiko, 33824 Werther (DE)
(74) Vertreter: Schober, Mirko

(56) Entgegenhaltungen:
- DE-C- 842 566
- DE-C1- 4 419 545
- DE-U1-202009 011 668
- US-A- 2 837 103

## Beschreibung

Die Erfindung betrifft eine Anordung aufweisend eine Rüchschlagklappe und eine Zuhaltevorrichtung.

Im Zuge eines effektiven Explosionsschutzes ist es notwendig in Rohrleitungssystemen, in denen explosive Medien, insbesondere Staub-Luftgemische transportiert werden, geeignete Explosionsschutzvorrichtungen vorzusehen. Aus diesem Grund werden in den Rohrleitungen Rückschlagklappen verbaut, wie sie prinzipiell aus der DE 20 2008 000 701 U1 bekannt sind.

An die Rückschlagklappen wird die Anforderung gestellt, dass diese sich im Explosionsfall schließen und verriegelt werden. Dabei ist es wünschenswert, dass im normalen Betrieb ein Öffnen und Schließen der Rückschlagklappe abhängig von den Strömungsverhältnissen in der Rohrleitung möglich ist, ohne dass der Verriegelungsmechanismus die Rückschlagklappe verriegelt. Aus der DE 20 2009 011 668 U1 ist eine Sicherungsanordnung bekannt, welche beim Überschreiten einer in Sperrichtung wirkenden Sperrkraft eine Arretierung der Rückschlagklappe bewirkt. Die Sperrkraft resultiert dabei aus einer auf die Rückschlagklappe wirkenden Druckdifferenz, welche aus dem mit einer Explosion verbundenen Druckanstieg entsteht. Eine solche Anordnung weist jedoch den Nachteil auf, dass sie nicht eingesetzt werden kann, wenn im Normalbetrieb Druckdifferenzen mit hohen resultierenden Sperrkräften auf die Rückschlagklappe einwirken, des weiteren wirkt durch die Arretierungseinrichtung eine Kraft auf die Rückschlagklappe entgegen ihrer Schließrichtung, was sich im Normalbetrieb störend im Hinblick auf ein dichtes Verschließen der Rückschlagklappe bei geringen Sperrkräften auswirkt. Zudem kann im Explosionsfall ein Flammendurchschlag nur dann zuverlässig verhindert werden, wenn sich in dem Moment, in dem die Flammenfront die Rückschlagklappe erreicht, bereits ein für das Arretieren der Rückschlagklappe ausreichender Explosionsdruck aufgebaut hat.

Der Erfindung liegt die Aufgabe zugrunde, eine Zuhaltevorrichtung für Rückschlagklappen zu schaffen, die sich im Normalbetrieb nicht störend auf das Verhalten der Rückschlagklappe auswirkt, im Explosionsfall ein zuverlässiges Verriegeln der Rückschlagklappe bewirkt und darüber hinaus einfach, kostengünstig und wartungsfreundlich ist.

Gelöst wird die Aufgabe durch eine Anordnung aus einer Zuhaltevorrichtung und einer Rückschlagklappe mit den Merkmalen des Anspruchs 1.

Erfindungsgemäß weist die Anordnung eine Zuhaltevorrichtung auf, die ein Fixierelement aufweist, welches außerhalb seines Schwerpunkts drehbar gelagert ist. Durch die drehbare Lagerung außerhalb des Schwerpunktes besitzt das Fixierelement eine Ruhelage, in der es frei an seiner Lagerung hängend in einem stabilen Gleichgewicht verharrt sowie einen oberen Totpunkt in der Position, in der sich der Schwerpunkt des Fixierelements genau über dem Drehpunkt der Lagerung befindet.

Erfindungsgemäß ist das Fixierelement so gestaltet, dass sich aufgrund seiner Konturierung auf der einen Seite einer gedachten Achse durch den Schwerpunkt des Fixierelements und dessen Aufhängepunkt ein Haltbereich und auf der anderen Seite dieser Achse ein Anschlagsbereich ergibt. Vorzugsweise ist dabei das Fixierelement im Wesentlichen scheibenförmig gestaltet, wobei die Konturierung den Scheibenrand betrifft.

In der bevorzugten Bauform weist der Anschlagbereich einen nasen- oder buckelartigen Vorsprung auf bzw. ist als solcher gestaltet. Der Haltebereich weist vorzugsweise einen hakenartigen Vorsprung auf, der gemeinsam mit einem weiteren Teilbereich des Fixierelements die Umfassung einer gekrümmten Einbuchtung darstellt. Vorzugsweise ergibt sich daraus eine Geometrie der gekrümmten Einbuchtung, die im Wesentlichen einem Kreisbogensegment entspricht, welches eine Krümmung aufweist, die den Drehpunkt der Aufhängung des Fixierelements als Mittelpunkt hat.

Erfindungsgemäß ist ein mit der Rückschlagklappe zusammenwirkendes Anschlagelement vorgesehen, das aufgrund der Bewegung der Rückschlagklappe bewegt wird und beim Schließen der Rückschlagklappe auf den Anschlagbereich auftrifft. Überschreitet die Rückschlagklappe beim Schließen eine kritische Geschwindigkeit, so bewirkt der Impuls, der beim Auftreffen des Anschlagelements auf den Anschlagbereich auf das Fixierelement übertragen wird, dass das Fixierelement eine Drehung über seinen oberen Totpunkt hinaus ausführt. Durch das Überschreiten des oberen Totpunkts kommt das Fixierelement mit seinem Haltebereich an einem, ebenfalls mit der Rückschlagklappe zusammenwirkenden Halteelement zum Eingriff. In der bevorzugten Ausführungsform sind das Anschlagelement und das Halteelement in einem Bauteil vereint, vorzugsweise handelt es sich um einen Bolzen. Anschlag und/oder Halteelement können dabei an einem Hebel befestigt sein, der drehfest mit der Schwenkachse der Rückschlagklappe verbunden ist.

Ist der Haltebereich des Fixierelements am Halteelement zum Eingriff gekommen, so wird durch die mechanische Kopplung des Halteelements mit der Rückschlagklappe diese in ihrer geschlossenen Position gehalten und somit verriegelt.

Bevorzugte Ausführungsformen können dabei vorsehen, dass ein Entriegelungsmechanismus vorgesehen wird, um bei einer Wiederaufnahme des Normalbetriebs die Rückschlagklappe auch aus der Distanz entriegeln zu können. Hierbei kann es sich beispielsweise um einen mechanischen Mechanismus handeln, der bei Betätigung eine Drehung des Fixierelements entgegen der Drehrichtung und des Verriegelungsvorgangs bewirkt. Eine denkbare Ausführungsform kann hierbei ein am Fixierelement angreifender Seilzug sein.

Eine weitere bevorzugte Ausführungsform sieht zudem einen Meldeschalter vor, welcher dazu geeignet ist, das Verriegeln der Klappe aufgrund der Position des Fixierelements zu erkennen und beispielsweise auf elektrischem oder elektronischem Weg an eine Prozessleitwarte oder Steuerung zu signalisieren oder eine Alarmierungsvorrichtung vor Ort auszulösen.

Es ist möglich, im Hinblick auf eine höhere Dichtheit der geschlossenen Rückschlagsklappe bzw. eine erhöhte Sicherheit der Zuhaltevorrichtung auf beiden Seiten der Rückschlagsklappe erfinderungsgemäße Zuhaltevorrichtungen vorzusehen. Dabei ist es möglich, die Bewegung beider Fixierelemente durch geeignete Maßnahmen zu synchronisieren oder eine unabhängige Funktion beider Zuhaltevorrichtungen vorzusehen.

Es ist möglich, die erfindungsgemäßen Zuhaltevorrichtungen außerhalb wie innerhalb des Gehäuses der Rückschlagklappe vorzusehen.

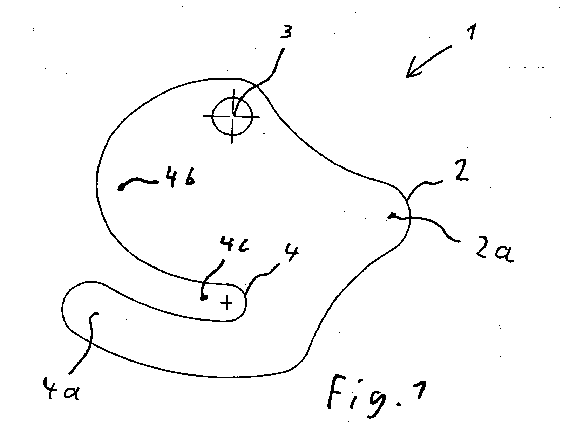

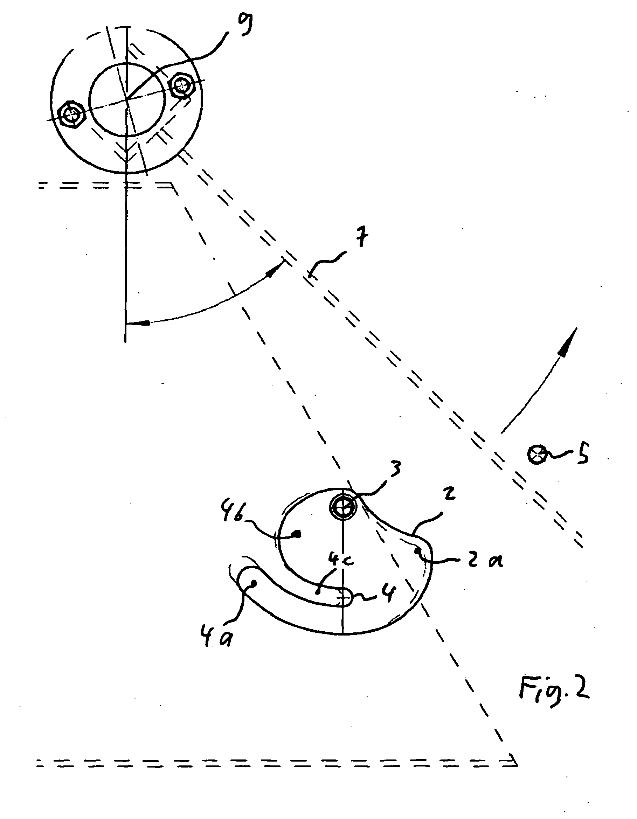

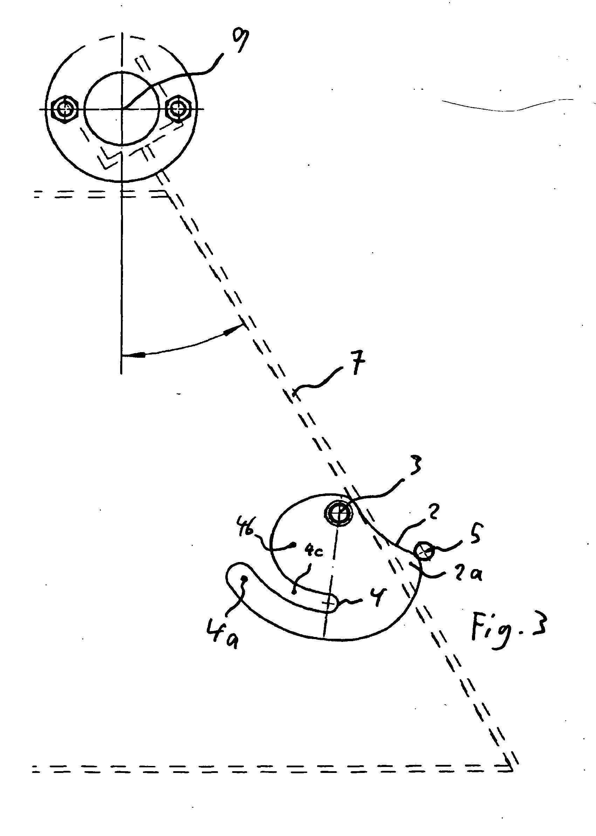

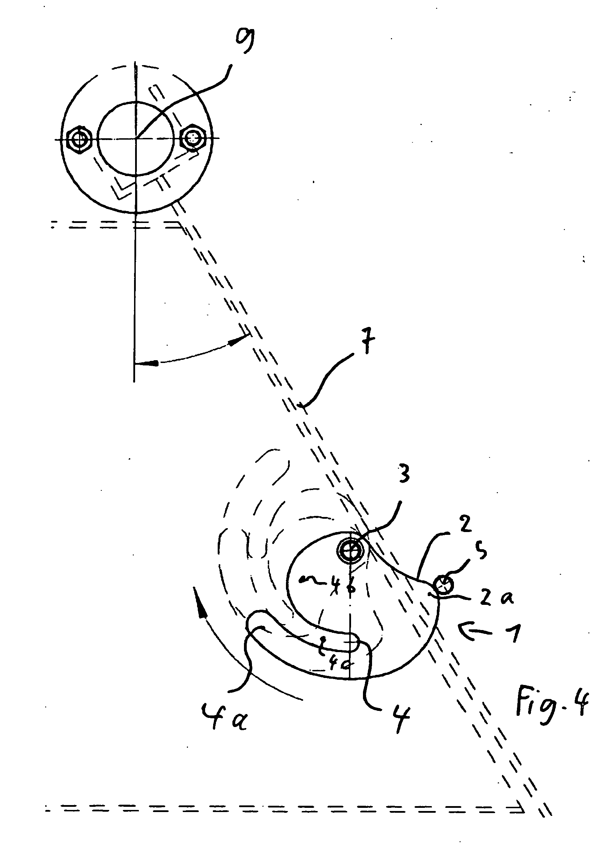

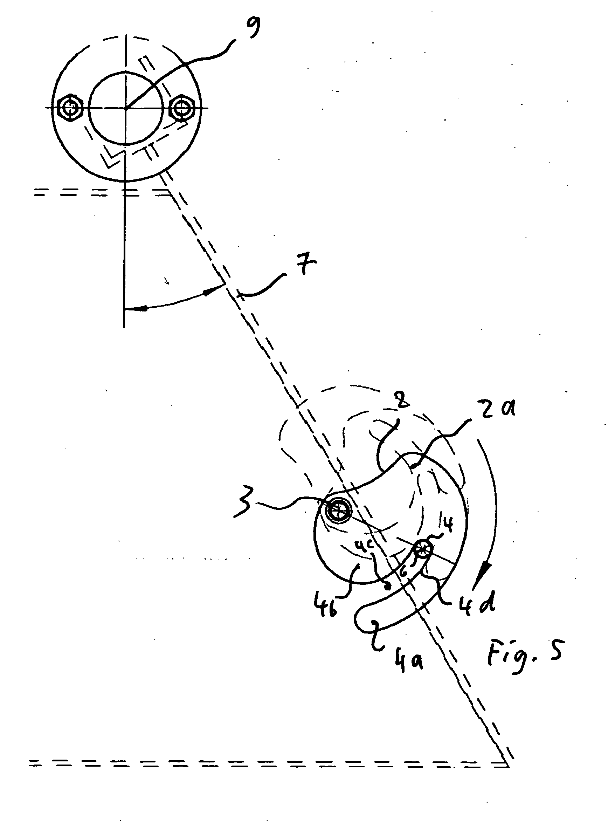

Die Erfindung wird im Folgenden anhand der Fig. 1 - 5 schematisch näher erläutert:
- Fig. 1: zeigt beispielhaft schematisch ein erfindungsge- mäßes Fixierelement.
- Fig. 2: zeigt schematisch eine beispielhafte erfindungs- gemäße Zuhaltevorrichtung im Normalbetrieb bei geöffneter Rückschlagklappe.
- Fig. 3: zeigt schematisch eine beispielhafte erfindungs- gemäße Zuhaltevorrichtung im Normalbetrieb bei geschlossener Rückschlagklappe.
- Fig. 4: zeigt eine beispielhafte erfindungsgemäße Zuhaltevorrichtung in dem Moment des Auftreffens des Anschlagelements auf den Anschlagsbereich im Explosionsfall.
- Fig. 5: zeigt schematisch eine beispielhafte erfindungs- gemäße Zuhaltevorrichtung im verriegelten Zu- stand.

Das Fixierelement 1 weist zur drehbaren Lagerung außerhalb seines Schwerpunkts eine Aufnahme 3 auf, bei der es sich im gezeigten Beispiel um eine Bohrung handelt. Das beispielhafte Fixierelement 1 ist dabei im wesentlich scheibenförmig gestaltet, was eine einfache Fertigung durch Ausschneiden aus flächigen Rohlingen ermöglicht. Die Haupterstreckungsrichtung des flächigen Fixierelements liegt dabei in der Drehebene.

Der Anschlagbereich 2 ist so gestaltet, dass er einen vorspringen Bereich 2a aufweist, der in den gezeigten Beispielen eine Nasen- oder Buckelform hat. Der Haltebereich 4 weist als wesentliches Gestaltungsmerkmal die kreisbogensegmentförmige Einbuchtung 4c auf, welche durch den Teilbereich 4b des Fixierelements 1 und den hakenartigen Vorsprung 4a begrenzt wird.

Im Normalbetrieb bei geöffneter Rückschlagklappe 7 hat das Anschlagelement 5 keinen Kontakt zu dem Anschlagbereich 2 des Fixierelements 1. Das Fixierelement hängt drehbar an seiner Aufnahme 3 und befindet sich in seiner Ruhestellung, in welcher der Schwerpunkt des Fixierelements 1 sich unterhalb der Aufnahme 3 befindet.

Wird die Rückschlagklappe 7 im Normalbetrieb geschlossen, so kommt das Anschlagelement 5 in Kontakt mit dem nasenartigen Vorsprung 2a des Anschlagbereichs 2. Das Fixierelement 1 wird leicht aus seiner Ruhelage ausgelenkt und liegt dadurch mit dem Anschlagbereich 2 am Anschlagelement 5 an. Bei einem normalen Schließvorgang der Rückschlagklappe 7 bewegt sich diese mit einer Geschwindigkeit, die unterhalb einer kritischen Geschwindigkeit liegt. Das Anschlagelement 5, das sich mit der Rückschlagklappe bewegt, überträgt daher beim Aufprall auf den Haltebereich 2 lediglich einen Impuls auf das Fixierelement 1, der nicht ausreicht, dieses soweit aus seiner Ruhelage auszulenken, dass der obere Totpunkt erreicht wird.

Im Explosionsfall dagegen schließt sich die Rückschlagklappe 7 mit einer deutlich höheren Geschwindigkeit, welche die kritische Geschwindigkeit überschreitet. Die kritische Geschwindigkeit ist die, bei der der vom Anschlagelement 5 auf das Fixierelement 1 übertragene Impuls so groß wird, dass die resultierende Auslenkung des Fixierelements 1 aus seiner Ruhelage ausreicht, den oberen Totpunkt der Drehbewegung zu überschreiten. Wird der obere Totpunkt überschritten, so pendelt das Fixierelement 1 nicht wie im Normalbetrieb zurück, um mit dem Anschlagbereich 2 am Anschlagelement 5 zum Anliegen zu kommen, sondern dreht sich nach dem Überschreiten des oberen Totpunkts weiter, wodurch es mit dem Haltebereich 4 am Halteelement 6 zum Eingriff kommt.

Bei diesem Verriegelungsvorgang umgreift der hakenförmige Vorsprung 4a das Halteelement 6. Dieses befindet sich in Verriegelungslage am Ende der Einbuchtung 4c, wo es am Haltebereich 4 zum Anliegen kommt. Der Abstand des Halteelements 6 zur Achse seiner Drehbewegung, welche im bevorzugten Fall der Drehachse 9 der Rückschlagklappe 7 entspricht, ist dabei größer als der Krümmungsradius der zur Einbuchtung 4c hin liegenden Seite 4d des hakenförmigen Vorsprungs 4a. Aufgrund dieser Geometrie ist die Rückschlagklappe derart verriegelt, dass sie erst wieder geöffnet werden kann, wenn das Fixierelement 1 durch einen externen Eingriff entgegen seiner Drehbewegung beim Verriegeln der Rückschlagklappe außer Eingriff an dem Halteelement 6 gebracht wird.

## Patentansprüche

1. Anordnung aufweisend eine Rückschlagklappe (7) und eine Zuhaltevorrichtung zur Fixierung der Rückschlagklappe (7) im geschlossenen Zustand, wobei die Vorrichtung ein Fixierelement (1) aufweist, das außerhalb seines Schwerpunkts drehbar gelagert ist und einen Anschlagbereich (2) sowie einen Haltebereich (4) aufweist, wobei das Fixierelement (1) derart bemessen ist, dass es beim Auftreffen eines mit der Rückschlagklappe zusammenwirkenden Anschlagelements (5), das aufgrund der Bewegung der Rückschlagklappe (7) bewegt wird, eine Drehung über einen oberen Totpunkt hinaus ausführt, wenn die Geschwindigkeit der Klappe beim Schließen einen kritischen Wert überschreitet, und dabei mit dem Haltebereich an einem Halteelement (6) zum Eingriff kommt und **dadurch** die Rückschlagklappe (7) im geschlossenen Zustand verriegelt.

2. Anordnung nach Anspruch 1,
**dadurch gekennzeichnet,**
**dass** der Anschlagbereich (2) einen nasen- oder buckelartigen Vorsprung (2a) aufweist.

3. Anordnung nach Anspruch 1 oder 2,
**dadurch gekennzeichnet,**
**dass** der Haltebereich (4) einen hakenartigen VorSprung (4a) aufweist.

4. Anordnung nach einem der vorigen Ansprüche,
**dadurch gekennzeichnet,**
**dass** Anschlagelement (5) und /oder Haltelement (6) an einem Hebel befestigt sind, der drehfest mit der Schwenkachse (9) der Rückschlagklappe verbunden ist.

5. Anordnung nach einem der vorigen Ansprüche,
**dadurch gekennzeichnet,**
**dass** Anschlagelement (5) und Haltelement (6) in einem Bauteil, insbesondere einem Bolzen, vereint sind.

6. Anordnung nach einem der vorigen Ansprüche,
**dadurch gekennzeichnet,**
**dass** an beiden Seiten der Rückschlagklappe (7) Fixierelemente (1) vorgesehen sind.

7. Anordnung nach einem der vorigen Ansprüche,
**dadurch gekennzeichnet,**
**dass** das Fixierelement (1) im Inneren des Gehäuses (9) der Rückschlagklappe (7) angeordnet ist.

8. Anordnung nach einem der vorigen Ansprüche,
**dadurch gekennzeichnet,**
**dass** ein mechanischer Entriegelungsmechanismus vorgesehen ist.

9. Anordnung nach einem der vorigen Ansprüche,
**dadurch gekennzeichnet,**
**dass** ein Meldeschalter vorgesehen ist, der geeignet ist das Verriegeln der Klappe zu signalisieren.

## Claims

1. Arrangement comprising a non-return valve (7) and a closing device for fixing the non-return valve (7) in the closed state, wherein the device comprises a fixing element (1) which is mounted rotationally outside of its centre of gravity and comprises a stop region (2) and a holding region (4), wherein the fixing element (1) is dimensioned so that upon contact with a stop element (5) cooperating with the non-return valve, which stop element (5) is moved due to the movement of the non-return valve (7), it carries out a rotation over a top dead centre if the speed of the valve exceeds a critical value upon closure and thereby comes into engagement with the holding region on a holding element (6) and thereby locks the non-return valve (7) in the closed state.

2. Arrangement according to claim 1,
**characterised in that**
the stop region (2) comprises a nose-like or boss-like projection (2a).

3. Arrangement according to claim 1 or 2,
**characterised in that**
the holding region (4) comprises a hook-like projection (4a).

4. Arrangement according to one of the preceding claims,
**characterised in that**
the stop element (5) and / or holding element (6) are fixed to a lever which is connected in a rotationally secure manner to the pivot axis (9) of the non-return valve.

5. Arrangement according to one of the preceding claims,
**characterised in that**
the stop element (5) and holding element (6) are brought together in one component, in particular a pin element.

6. Arrangement according to one of the preceding claims,
**characterised in that**
fixing elements (1) are provided on both sides of the non-return valve (7).

7. Arrangement according to one of the preceding claims,
**characterised in that**
the fixing element (1) is arranged inside the housing (9) of the non-return valve (7).

8. Arrangement according to one of the preceding claims,
**characterised in that**
a mechanical unlocking mechanism is provided.

9. Arrangement according to one of the preceding claims,
**characterised in that**
a signalling switch is provided which is suitable for signalling the locking of the valve.

## Revendications

1. Dispositif présentant un clapet battant (7) et un dispositif de maintien en position fermée pour la fixation du clapet battant (7) à l'état fermé, sachant que ledit dispositif est doté d'un élément de fixation (1), qui est monté pivotant en dehors de son centre de gravité, et d'une section de butée (2), ainsi que d'une section de maintien (4), sachant que l'élément de fixation (1) est dimensionné de sorte que, lors de l'intervention d'un élément de butée (5), qui, coopérant avec le clapet battant, est mû en fonction du mouvement dudit clapet battant (7), il exécute une rotation au-delà d'un point mort, quand la vitesse du clapet dépasse une valeur critique lors de la fermeture, et, ce faisant, entre en prise avec la section de maintien, sur un élément de maintien (6), et verrouille ainsi le clapet battant (7) à l'état fermé.

2. Dispositif selon la revendication 1, **caractérisé en ce que** la section de butée (2) présente une saillie (2a) en forme de nez ou de bosse.

3. Dispositif selon revendication 1 ou 2, **caractérisé en ce que** la section de maintien (4) présente une saillie (4a) en forme de crochet.

4. Dispositif selon l'une des revendications précédentes, **caractérisé en ce que** l'élément de butée (5) et / ou l'élément de maintien (6) sont fixés à un levier, qui est relié, solidaire en rotation, à l'axe de pivotement (9) du clapet battant.

5. Dispositif selon l'une des revendications précédentes, **caractérisé en ce que** l'élément de butée (5) et l'élément de maintien (6) sont réunis en un composant, en particulier en un boulon.

6. Dispositif selon l'une des revendications précédentes, **caractérisé en ce que** des éléments de fixation (1) sont prévus sur les deux côtés du clapet battant (7).

7. Dispositif selon l'une des revendications précédentes, **caractérisé en ce que** l'élément de fixation (1) est disposé à l'intérieur du boîtier (9) du clapet battant (7).

8. Dispositif selon l'une des revendications précédentes, **caractérisé en ce qu'**un mécanisme de déverrouillage mécanique est prévu.

9. Dispositif selon l'une des revendications précédentes, **caractérisé en ce qu'**est prévu un commutateur de signalisation, qui est apte à signaliser le verrouillage du clapet.
